(19) Europäisches Patentamt
European Patent Office
Office européen des brevets

(11) **EP 2 640 306 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(21) Anmeldenummer: **11807636.3**

(22) Anmeldetag: **15.11.2011**

(51) Int Cl.:
*A61C 13/00* *(2006.01)*     *A61C 8/00* *(2006.01)*

(86) Internationale Anmeldenummer:
**PCT/EP2011/005748**

(87) Internationale Veröffentlichungsnummer:
**WO 2012/065718 (24.05.2012 Gazette 2012/21)**

(54) **DENTAL-IMPLANTATSYSTEM UND VERFAHREN ZUR HERSTELLUNG EINES DENTAL-IMPLANTATSYSTEMS**

DENTAL IMPLANT SYSTEM AND METHOD FOR PRODUCING A DENTAL IMPLANT SYSTEM

SYSTÈME D'IMPLANT DENTAIRE ET PROCÉDÉ POUR LA FABRICATION D'UN SYSTÈME D'IMPLANT DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2010 DE 102010051176**

(43) Veröffentlichungstag der Anmeldung:
**25.09.2013 Patentblatt 2013/39**

(73) Patentinhaber:
• **Brodbeck, Urs**
  **8703 Erlenbach (CH)**
• **Schlee, Markus**
  **91301 Forchheim (DE)**
• **Zipprich, Holger**
  **64342 Malchen (DE)**

(72) Erfinder:
• **Brodbeck, Urs**
  **8703 Erlenbach (CH)**
• **Schlee, Markus**
  **91301 Forchheim (DE)**
• **Zipprich, Holger**
  **64342 Malchen (DE)**

(74) Vertreter: **Cornelius, Thomas**
**Tergau & Walkenhorst**
**Patentanwälte - Rechtsanwälte**
**Eschersheimer Landstraße 105-107**
**60322 Frankfurt am Main (DE)**

(56) Entgegenhaltungen:
**EP-A1- 0 015 599     WO-A1-2008/011948**
**CH-A5- 696 625**

**Beschreibung**

Die Erfindung betrifft ein Dental-Implantatsystem mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil, wobei die Implantat-Teile über einen an eines der Implantat-Teile angeformten, in einen im anderen Implantat-Teil vorgesehenen Aufnahmekanal einschiebbaren Verbindungszapfen mechanisch miteinander verbindbar sind.

Zum Ausgleich des Verlusts eines Zahnes können im Rahmen der rekonstruktiven Therapie Dentalimplantate zum Einsatz kommen. Sie werden üblicherweise anstelle eines extrahierten oder ausgefallenen Zahnes in den Kieferknochen eingesetzt, um dort nach einer Einheilphase von etwas vier bis zwölf Wochen ein als Zahnersatz dienendes prothetisches Teil oder eine Krone zu halten. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil bezeichnetes zweites Implantat-Teil umfasst, an das wiederum das als Prothese oder dergleichen vorgesehene Zahnersatzstück anbringbar ist. Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantat-bett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Zur mechanischen Verbindung der Implantat-Teile miteinander ist üblicherweise ein an eines der Implantat-Teile, in der Regel an das Aufbauteil, angeformter Verbindungszapfen vorgesehen. Dieser ist in einen im anderen Implantat-Teil, in der Regel im Pfostenteil, vorgesehenen Aufnahmekanal einschiebbar. Hinsichtlich Geometriewahl und Dimensionierung, insbesondere der Querschnitte, sind der Verbindungszapfen einerseits und der Aufnahmekanal andererseits dabei üblicherweise derart aneinander angepasst, dass bei vergleichsweise einfacher Montierbarkeit dennoch eine gute Führung der Bauteile ineinander und damit eine ausreichend hohe mechanische Stabilität erreichbar sind. Das Aufbauteil, das üblicherweise an seinem oberen Bereich mit einer Krone, einer anderen prothetischen Versorgung oder dergleichen in an sich bekannter Weise ausgestattet wird, kann dabei zur mechanischen Verbindung mit dem Pfostenteil über den in den Aufnahmekanal eingeschobenen Verbindungszapfen mit dem Pfostenteil verklebt sein. Das Aufbauteil kann aber auch in das Pfostenteil eingepresst werden und lediglich über eine Verklemmung fixiert werden, oder auch zusätzlich durch eine Zementierung oder Verklebung fixiert werden.

Allerdings wird bei derartigen Implantatsystemen das Dentalimplantat beim Einschrauben des Aufbauteils und insbesondere auch später bei Kauvorgängen mechanisch extrem stark belastet, so dass eine Klebeverbindung der genannten Art möglicherweise gerade im Hinblick auf die angestrebte sehr lange Verweildauer im Patientenmund keine ausreichend hohe mechanische Stabilität aufweist. Um dem Rechnung zu tragen, kann das Aufbauteil alternativ auch über eine geeignet gewählte Verbindungsschraube mit dem Pfostenteil verschraubt sein. Bei der Einbringung wird dabei üblicherweise das Gewinde der Verbindungsschraube in ein zugeordnetes Innengewinde im Pfostenteil eingeschraubt. Der Schraubenkopf der Verbindungsschraube presst dabei beim Einschrauben über eine Stirnsenkung des Aufbauteils dieses auf das Dentalimplantat. Derartige mehrteilige Dental-Implantatsysteme mit einer Schraubverbindung zwischen Aufbauteil und Pfostenteil sind beispielsweise aus der DE 10 2006 018 726 A1 oder der DE 10 2008 054 138 A1 bekannt.

Das erste Implantat-Teil oder Pfostenteil und ebenso das zweite Implantat-Teil oder Kopf- oder Aufbauteil bestehen üblicherweise aus einem geeignet gewählten Metall, und zwar insbesondere aus Titan oder einer Titanlegierung. Durch diese Materialwahl sind eine akzeptable Verträglichkeit für den Patienten und eine gute Biokompatibilität erreichbar. Zudem weisen auf dieser Materialbasis gefertigte Implantatsysteme eine hohe Langzeitstabilität bei geringer Frakturanfälligkeit auf. Dementsprechend ist Titan als Grundstoff für Implantatsysteme weit verbreitet und genießt auch weitgehende wissenschaftliche Akzeptanz, zumal auch die für die Verwendung innerhalb der rekonstruktiven Therapie erforderliche Sterilisierung vergleichsweise einfach und zuverlässig sichergestellt werden kann. Die Materialkosten sind zudem begrenzt, so dass in der Regel mit akzeptablem Aufwand auch vergleichsweise große Stückzahlen an Implantatsystemen auf dieser Basis herstellbar sind. Ein mehrteiliges Implantatsystem auf Titanbasis, bei dem im Verbindungsbereich zwischen Pfosten- und Aufbauteil zum Ausgleich von Spalten ein elastisches Dichtelement vorgesehen ist, ist aus der CH 696 625 A5 bekannt.

Andererseits kann aber bei derartigen, metallbasierten Implantatsystemen ein allergenes Potenzial unter Umständen nicht ausgeschlossen werden. Allergien gegen Metalle werden üblicherweise durch die Bildung von Metallionen verursacht. Darüber hinaus besteht die Gefahr, dass durch vom Implantat abgesonderte Partikel, beispielsweise durch Abplatzungen von der Implantatoberfläche oder durch Abrieb bei mehrteiligen Systemen, entzündliche Reaktionen im Patientenmund hervorgerufen werden könnten.

Zudem kann die Eigenfarbe der metallischen Implantatbestandteile einen ästhetisch und/oder optisch störenden Einfluss haben, und die elektrische Leitfähigkeit der Metallkomponenten kann zu störenden Effekten führen.

Aus diesen Gründen kann eine metallfreie Ausführung von Implantatsystemen wünschenswert sein. Als Alternative zu metallischen Systemen kommen insbesondere Keramiken als Basismaterial für Implantate in Betracht, üblicherweise auf der Basis von Zirkonoxid (vorzugsweise Yttriumoxid- oder Aluminiumoxid-stabilisiert), oder auch zirkonhaltige Legierungen, Zirkonoxid-Aluminiumoxid-Keramiken oder Keramiken, die entweder Zirkonoxid oder Aluminiumoxid beinhalten oder mindestens eine der Keramiken als Hauptbestandteil aufweisen. Darüber hinaus können Keramiken eingesetzt werden, die auf Silizium- oder Siliziumoxidbasis aufgebaut sind und z. B. Beimischungen von Stickstoff, Wasserstoff, Kohlenstoff oder Wolfram beinhalten. Keramische Implantatsysteme haben den allgemeinen Vorteil hoher Biokompatibilität und damit guter Verträglichkeit, wobei das allergene Potenzial ausgesprochen gering ist. Die Oberfläche ist weitgehend ungünstig für Bakterienwachstum, so dass derartige Implantate in ihrer Gesamtheit besonders günstig für Langzeitanwendungen und hohe Verweildauern im Patientenmund sind. Zudem treten nahezu keine Grauverfärbungen im umgebenden Gewebe auf, so dass besonders hochwertige ästhetische Wirkungen erzielbar sind.

Dentalimplantate auf Keramikbasis sind allerdings derzeit im Wesentlichen nur in einteiliger Ausführung bekannt. Die Materialeigenschaften der Keramikbauteile (z. B. spröde, große Härte, geringe bis keine Duktilität) erschweren das Zusammenfügen und schließen eine hohe Haltbarkeit und Langzeitstabilität mehrteilig ausgeführter Implantatsysteme nahezu aus. Insbesondere wegen der geringen elastischen und der mangelnden plastischen Verformbarkeit von Keramiken, gerade bei Materialhärten (nach Vickers) von mehr als 500 oder sogar von mehr als 1000, ist nämlich ein flächiger Kontakt der Bauteile zueinander nur sehr schwer realisierbar, so dass gerade bei der Übertragung der vergleichsweise großen Kaukräfte punktuelle Belastungen im Kontaktbereich der Implantatteile mehrteiliger Systeme auftreten können. Diese können wiederum zu erhöhtem lokalem Druck im Verbindungsbereich und demzufolge zur möglichen Bildung von Mikrorissen oder Beschädigungen in der Keramikstruktur, die wiederum zu Frakturen oder Brüchen in den Bauteilen an sich führen können. Die grundsätzlichen Vorteile von mehrteiligen Dental-Implantatsystemen sind daher für Keramik-basierte Systeme derzeit nur sehr eingeschränkt nutzbar.

Ein Dentalimplantatsystem der oben genannten Art auf Keramikbasis, dessen Verbindungszapfen in seinem Kontaktbereich zum Aufnahmekanal eine ein elastisches Element bildende Beschichtung aufweist, wobei die Oberfläche des Verbindungszapfens zur Bildung einer stoffschlüssigen Verbindung mit diesem elastischen Element porös ausgeführt ist, ist aus der EP 0 015 599 A1 bekannt. Dieses System weist aber nur eine unzureichende mechanische Stabilität im Hinblick auf die bei einer Kaubelastung auftretenden Kräfte auf.

Der Erfindung liegt daher die Aufgabe zu Grunde, ein - vorzugsweise zwei- oder mehrteilig ausgeführtes - Implantatsystem der oben genannten Art anzugeben, das auch bei der Verwendung keramischer oder diesen in ihren grundsätzlichen Materialeigenschaften vergleichbarer Basismaterialien für mindestens eines der Implantat-Teile eine besondere Stabilität und lange Nutzungsdauer ermöglicht. Des Weiteren soll ein besonders geeignetes Herstellungsverfahren für das Implantat-System angegeben werden.

Bezüglich des Implantatsystems wird diese Aufgabe erfindungsgemäß mit den Merkmalen des Anspruchs 1 gelöst. Dabei ist der Verbindungszapfen aus einem Material mit einer Härte von mindestens 500, vorzugsweise von mindestens 750, besonders bevorzugt von mindestens 1000, gebildet und weist in einem Kontaktbereich zum Aufnahmekanal auf seiner Oberfläche eine aus einem im Vergleich zum Material des Verbindungszapfens weicheren Material, insbesondere mit einer Härte von höchstens 25, vorzugsweise von höchstens 20, besonders bevorzugt höchstens 15, gebildete Beschichtung mit einer Schichtdicke von höchstens 0,3 mm, vorzugsweise als Abstandshalter, auf. Zur Herstellung einer stoffschlüssigen Verbindung mit der Beschichtung ist der Verbindungszapfen dabei in seinem mit der Beschichtung versehenen Oberflächenbereich porös, vorzugsweise mit einer Porosität von mindestens 0,1, ausgeführt, wobei die Oberfläche des Verbindungszapfens im Bereich der stoffschlüssigen Verbindung mit der Beschichtung einen $r_a$-Wert von höchstens 10 %, vorzugsweise von höchstens 5 %, der Schichtstärke der Beschichtung aufweist. Mit anderen Worten: Die mittlere Rauigkeit der Oberfläche beträgt vorteilhafterweise höchstens 10 % der Schichtstärke der Beschichtung. Die genannten Härtewerte sind dabei als Härtewerte nach Vickers auf der Basis einer Prüfkraft von 10 kilopond gemäß DIN zu verstehen, d. h. der genannte Härtewert von 500 entspricht beispielsweise einer normgerechten Angabe von 500 HV 10.

Vorteilhafte Ausgestaltungen der Erfindung sind Gegenstand der Unteransprüche.

Die Erfindung geht von der Überlegung aus, dass bei mehrteiligen Implantatsystemen eine hohe Stabilität und Langlebigkeit dann erreichbar ist, wenn den gerade bei den Kauvorgängen auftretenden Kräften in geeigneter Weise Rechnung getragen wird. Gerade bei der Weiterleitung dieser Kräfte in mehrteiligen Dental-Implantatsystemen vom Aufbauteil in das im Kieferknochen verankerte Pfostenteil sollte eine weitgehend materialschonende Kraftübertragung sichergestellt sein. Dies ist insbesondere erreichbar, indem konsequent ein flächiger Kontakt unter weitgehender Vermeidung lokalisierter Kontaktpunkte zwischen den Implantat-Teilen hergestellt wird. Im Unterschied zu Metall-basierten Systemen, bei denen sich ein solcher flächiger Kontakt auf Grund der höheren elastischen Verformbarkeit und der Duktilität des Materials in Reaktion auf die anliegenden Kräfte nahezu selbsttätig einstellt, könnte der flächige Kontakt in Keramikbasierten Systemen auf Grund der fehlenden Duktilität des Materials und im Hinblick auf nahezu notwendigerweise vorliegende Fertigungstoleranzen und -ungenauigkeiten nur unzureichend sein.

Um dem geeignet entgegenzutreten, ist nunmehr ein zusätzliches Element im Aufbau des Dental-Implantatsystems vorgesehen, das in der Art eines Ausgleichskörpers die Bildung von lokalen, punktuellen Kontaktstellen zwischen den Implantat-Teilen verhindern soll. Der dazu vorgesehene Abstandshalter sollte hinsichtlich seiner Materialwahl derart vorgegeben sein, dass er - auf Grund geeigneter Duktilität - einen geeigneten Ausgleich im Zwischenraum zwischen den Implantat-Teilen herstellt und somit eine flächige Kraftübertragung zwischen den Komponenten gewährleistet. Dazu sollte das Material des Abstandshalters entsprechend weicher und damit verformbarer gewählt sein als das Material der eigentlichen Implantat-Teile.

Der Abstandshalter könnte grundsätzlich als Geflecht von ihrerseits mit dem Verbindungszapfens stoffschlüssig verbundenen, also beispielsweise angeklebten oder angeschmolzenen, Materialfäden ausgeführt sein, so dass er insbesondere in Form eines netzartigen Überzugs vorliegt. Auf diese Weise ist einerseits eine zuverlässige Einstellung eines geeigneten, die möglicherweise fertigungsbedingt auftretenden Oberflächenrauigkeiten der Kontaktflächen ausgleichenden Mindestabstands zwischen den Kontaktflächen möglich, wobei andererseits in den durch die Gewebefäden gebildeten Zwischenräumen noch freie, für eine Materialaufnahme geeignete Volumina gebildet werden. Diese eignen sich in besonderem Maße zur Aufnahme überschüssigen Materials, beispielsweise von Klebstoff oder dergleichen. Ein solchermaßen ausgeführter, ebenfalls als erfinderisch angesehener Abstandshalter ist somit für eine Verklebung der Implantat-Teile miteinander besonders geeignet.

Nunmehr ist der Abstandshalter aber als auf die Oberfläche des Verbindungszapfens aufgebrachte Beschichtung ausgeführt. Die Beschichtung kann dabei teilweise oder netzartig auf der Oberfläche des Verbindungszapfens angebracht sein, ist vorteilhafterweise aber durchgängig und vollflächig ausgeführt. Damit ergibt sich eine vollflächige Ausführung des Abstandshalters auf dem Verbindungszapfen. In einer solchen Ausführung ist der Abstandshalter für ein Verkleben der Implantat-Teile miteinander ebenso geeignet wie für die Herstellung einer Verbindung durch Verschrauben, da der Abstandshalter in diesem Fall dann auch noch eine Dämpfung bei der Kraftübertragung zwischen den miteinander verschraubten Implantat-Teilen bewirken kann.

Für eine gute Verarbeitbarkeit ist der Abstandshalter dabei formschlüssig, also insbesondere als Beschichtung oder angeklebtes oder angeschmolzenes Element, mit dem Verbindungszapfen verbunden. Analog kann selbstverständlich der Abstandshalter auch in der Art einer Innenbeschichtung auf der Innenseite des Aufnahmekanals aufgebracht sein, so dass er ebenfalls nach einer Montage der Implantat-Teile im Verbindungsbereich der Implantat-Teile miteinander zwischen diesen positioniert ist. Des Weiteren ist auch eine Kombination zweier Abstandshalter, also jeweils einer an jedem der beiden Implantat-Teile, möglich.

Um auch bei einer Montage mit vergleichsweise hohen Presskräften und in kurzer Montagezeit eine zuverlässige Positionierung der den Abstandshalter bildenden Beschichtung und auch eine besondere Langzeitstabilität und ein zuverlässiges Anhaften der Beschichtung zu gewährleisten, ist die stoffschlüssige Verbindung des Abstandshalters mit dem Verbindungszapfen (bzw., in analoger Ausführung, der Innenoberfläche des Aufnahmekanals) besonders innig ausgeführt. Dazu weist der Verbindungszapfen im Bereich seiner Verbindung mit dem Abstandshalter oder im Bereich der Beschichtung eine aufgeraute und/oder poröse Oberfläche auf. Die, insbesondere durch Aufrauung erzeugte Porosität der Oberfläche ist dabei derart ausgestaltet, dass eine poröse Oberfläche gerade im Bereich der stoffschlüssigen Verbindung des Verbindungszapfens mit der Beschichtung entsteht, vorzugsweise mit einer Porosität mit einer Strukturgröße von höchstens einem Mikrometer, alternativ oder zusätzlich bevorzugt mit einer Porosität von mindestens 0,1. Durch eine derartige, porös gehaltene Oberfläche ist sichergestellt, dass gerade in Kombination mit einer geeigneten Materialwahl für die Beschichtung deren Material zumindest teilweise in die porositätsbedingt vorliegenden Hohlräume in der Oberfläche eindringen kann und somit ein besonders inniger Stoffschluss entsteht. Die mit 0,1 angegebene Porosität wurde durch folgende Formel ermittelt:

$$\Phi = 1 - \frac{\rho}{\rho_0}$$

Dabei stehen die hierin verwendeten Buchstaben des griechischen Alphabets für: $\Phi$ = Porosität, $\rho$ = Rohdichte, $\rho_0$ = Reindichte.

Dabei ist die Porosität eine dimensionslose Messgröße. Sie stellt das Verhältnis von Hohlraumvolumen zu Gesamtvolumen eines Stoffes oder Stoffgemisches dar und ist als 1 minus dem Quotienten aus Rohdichte eines Festkörpers und Reindichte definiert.

Die vorgesehene Aufrauung wird dabei vorteilhafterweise nach der eigentlichen Herstellung, also insbesondere im Rahmen eines zusätzlichen Behandlungsschritts, auf die Oberfläche aufgebracht. Die Aufrauung kann beispielsweise mechanisch (z. B. durch Bestrahlung wie beispielsweise Sandstrahlen), chemisch (z. B. durch Ätzen) oder durch Bestrahlung mit einem Laser, vorzugsweise mit einem Femtosekunden-Laser, vorgenommen werden. Gerade durch die Bestrahlung mit einem Laser, der eine Pulsdauer von weniger als etwa 1 ps aufweist, können dabei auch gezielte Strukturen oder Strukturmuster auf die zu beschichtende Oberfläche aufgebracht werden, wobei zudem noch eine tiefergehende Beschädigung des darunterliegenden Materials, also insbesondere der Keramik, vermieden werden kann.

Um eine zuverlässige mechanische Verbindung zwischen den Implantat-Teilen bei hoher Dichtigkeit zu ermöglichen, weist der Verbindungszapfen vorteilhafterweise im Querschnitt eine an die Kontur des zugeordneten Aufnahmekanals angepasste Außenkontur auf. In Längsrichtung von Verbindungszapfen oder Aufnahmekanal gesehen können beide zudem mit gleichbleibendem Querschnitt, also beispielsweise mit zylindrischem Grundkörper, ausgeführt sein. Vorteilhafterweise verjüngen sich die Querschnitte aber in Richtung zum freien Ende des Verbindungszapfens hin, in besonders vorteilhafter Ausgestaltung in konischer Ausführung, so dass sich auf besonders einfache Weise ein guter Kraftschluss bei hoher Dichtigkeit erzielen lässt. In weiterer vorteilhafter Ausgestaltung weist die Außenkontur des Verbindungszapfens - und entsprechend daran angepasst der Aufnahmekanal in seiner Innenkontur - im Querschnitt zumindest teil- oder abschnittsweise eine mehrzählige Symmetrie auf. Damit ist einerseits in der Art einer Indizierung auf einfache Weise eine zuverlässige rotatorische Ausrichtung des Aufbauteils bei der Montage, also bei der Einbringung in den Patientenmund, erreichbar, wobei andererseits in der Art eines rotatorischen Gesperres selbst bei der Einleitung hoher Drehmomente in das System die gewählte rotatorische Ausrichtung in der Zahnumgebung zuverlässig erhalten bleibt.

Hinsichtlich seiner Schichtdicke ist der Abstandshalter vorteilhafterweise derart dimensioniert, dass einerseits eine zu große Nachgiebigkeit und Verformbarkeit des montierten Gesamtsystems infolge zu großer Schichtdicke vermieden und andererseits eine zuverlässige Kompensation von Oberflächenrauigkeiten und Fertigungstoleranzen gewährleistet ist. Dabei ist vorzugsweise auch dem Umstand Rechnung getragen, dass gerade bei konischen Verbindungen zwischen dem Aufbauteil und dem Pfostenteil die elastische Verformbarkeit des Pfostenteils zur Kompensation von fertigungsbedingten Winkeltoleranzen bezüglich des Konuswinkels dient. Bei herkömmlichen, metallischen mehrteiligen Implantatsystemen sind die Winkeltoleranzen dabei üblicherweise so dimensioniert, dass der Konuswinkel der Formausnehmung im Pfostenteil kleiner ist als der Konuswinkel des am Aufbauteil angeformten Kontaktstifts.

Bei verschraubten Systemen verformt sich dann beim Anziehen der Verbindungsschraube die Wand des Pfostenteils im elastischen Bereich derart, dass es zu einem flächigen Anliegen der Kontaktflächen aneinander kommt. Da dies bei keramischen Materialien auf Grund der mangelnden Verformbarkeit und ihrer großen Härte von (nach Vickers) beispielsweise mehr als 500 oder sogar mehr als 1000 ("Vickershärte", HV) nicht möglich ist, sollte die als Abstandshalter vorgesehene Beschichtung diese Kompensationen ermöglichen. Aus den genannten Gründen ist in vorteilhafter Ausgestaltung im Hinblick auf ansonsten gängige Dimensionierungsparameter der Dental-Implantatsysteme (Gesamtlänge, Durchmesser des Pfostenteils etc.) eine Schichtdicke von mindestens 0,001 mm, vorzugsweise mindestens 0,05 mm, besonders bevorzugt mindestens 0,01 mm, und/oder von höchstens 0,3 mm, vorzugsweise höchstens 0,2 mm, besonders bevorzugt höchstens 0,1 mm, vorgesehen.

Hinsichtlich der Materialwahl sind die jeweiligen Komponenten, insbesondere die Implantat-Teile, vorteilhafterweise im Hinblick auf eine hohe Langzeitstabilität gerade im vorgesehenen Einsatzumfeld und auch im Hinblick auf besonders gute Verträglichkeit und Bio-Kompatibilität geeignet gewählt. Für den Abstandshalter könnte dabei beispielsweise ein geeignet gewähltes, insbesondere im Hinblick auf die Materialwahl der eigentlichen Implantat-Teile ausreichend weiches Metall, vorzugsweise Gold, gewählt sein. Um aber auch eine vollständig metallfreie Ausführung des Implantatsystems zu ermöglichen, ist in besonders vorteilhafter Ausgestaltung der Abstandshalter aus einem Kunststoff, vorzugsweise aus einem hochbelastbaren thermoplastischen Kunststoff aus der Gruppe der Polyetherketone, insbesondere aus Polyetheretherketon, auch als PEEK bekannt, hergestellt. PEEK weist üblicherweise eine Härte nach Vickers von etwa 12 auf und erfüllt damit das nun vorgesehene Auslegungskriterium besonders zufriedenstellend.

In zusätzlicher oder alternativer vorteilhafter Weiterbildung weist der den Abstandshalter bildende Kunststoff einen Elastizitätsmodul von mindestens 1000 MPa auf. Damit ist der Abstandshalter ausreichend hart, um den beim Kauen auftretenden Kräften standzuhalten, so dass eine plastische Verformung und ein "Ausquellen" des Materials vermieden sind.

Um ein Aufquellen des Materials nach dem Einbringen in den Patientenmund und insbesondere eine durch ein derartiges Aufquellen möglicherweise bedingte Rissbildung in den Implantat-Teilen zuverlässig zu vermeiden, weist der den Abstands-halter bildende Kunststoff in zusätzlicher oder alternativer vorteilhafter Ausgestaltung eine Wasseraufnahme von höchstens 1 %, vorzugsweise von höchstens 0,5 %, besonders bevorzugt von höchstens 0,2 %, auf.

Im Hinblick auf allgemein übliche Regelungen und Vorschriften bei der therapeutischen Patientenversorgung sind die Bauteile des Implantatsystems vorteilhafterweise für eine problemlose Sterilisierbarkeit ausgelegt. Hierfür weist der den Abstandshalter bildende Kunststoff vorteilhafterweise eine Erweichungstemperatur von mindestens 140 °C, vorzugsweise von mindestens 160 °C, besonders bevorzugt von 300 °C, auf, so dass ohne Einschränkung gängige Heißdampf-Sterilisationen (üblicherweise bei einer Temperatur von 134 °C) je nach Bedarf einmalig oder auch mehrmalig vorgenommen werden können.

Der Verbindungszapfen ist vorzugsweise aus einer Keramik, insbesondere aus Zirkonoxid, gebildet, so dass insgesamt eine hohe Stabilität des Systems gewährleistet ist. Ein derartiger keramischer Verbindungszapfen mit aufgebrachter Oberflächenbeschichtung ist besonders vorteilhaft für eine Verwendung in Kombination mit einem Pfostenteil bzw. Aufnahmekanal aus Titan oder einem anderen metallischen Werkstoff, da grundsätzlich bei der Materialpaarung Keramik/Metall, insbesondere Keramik/Titan, auf Grund der deutlich größeren Härte der Keramik mit Metallabrieb und entsprechenden Oberflächen- und Farbänderungen gerechnet werden muss. Gerade die genannte Keramik weist üblicherweise eine Härte nach Vickers ("Vickershärte", HV) von mehr als 1000 auf. Da die genannten Effekte bereits bei Keramiken mit einer Vickershärte von 500 oder mehr verstärkt auftreten, ist bereits aus diesem Grund der als Zwischen- oder Pufferelement vorgesehene Abstandshalter besonders vorteilhaft. Die genannten Effekte, insbesondere der Oberflächenabrieb, können insbesondere durch die als Abstandshalter zwischen Keramik einerseits und Metall, insbesondere Titan, andererseits wirkende Oberflächenbeschichtung wirksam vermieden werden.

In besonders vorteilhafter Ausgestaltung wird aber für die Implantat-Teile insgesamt eine Keramik, insbesondere Zirkonoxid oder Aluminiumoxid, verwendet, jedenfalls als Hauptbestandteil, wodurch ein metallfreier Grundkörper bereitgestellt wird. Derartige Materialien zeichnen sich durch ihre hervorragende Biokompatibilität aus und bieten eine bakterienresistente Oberfläche. In besonders vorteilhafter Ausgestaltung ist dabei der Verbindungszapfen aus Yttrium- und/oder Aluminiumoxidstabilisiertem Zirkonoxid ausgeführt, wobei in weiterer vorteilhafter Ausgestaltung die Oberfläche des Verbindungszapfens im Bereich der stoffschlüssigen Verbindung mit dem Abstandshalter eine Verarmungszone mit einem im Vergleich zum Innenvolumen des Verbindungszapfens reduziertem Yttrium- bzw. Aluminiumoxid-Anteil aufweist.

Zur Herstellung einer derartigen Verarmungszone kann bevorzugt ein Keramik-Grundkörper mittels Laserbehandlung und/oder in einem flüssigen und/oder gasförmigen Medium behandelt werden, vorzugsweise in einem Säurebad, wobei das Säurebad mit Ionen versetzt ist, die jeweils aus einem Element aus einer der V. bis VII. Hauptgruppe des Periodensystems der Elemente bestehen oder ein derartiges Element als Bestandteil umfassen. Durch diese Behandlung ist ein Keramik-körper erhältlich, bei dem in einem Oberflächenbereich hinsichtlich eines Strukturparameters, insbesondere eines Legierungsbestandteils oder eines kristallographischen Phasenanteils, im Vergleich zum Innenvolumen eine Verarmungszone vorliegt.

Wie sich völlig überraschend und unerwarteterweise herausgestellt hat, führt gerade dieses Verfahren zur Ausbildung von Oberflächenstrukturen, die besonders günstige Benetzungseigenschaften gewährleisten und bei einer Verwendung des Keramikkörpers als Trägerkörper für den Abstandshalter ein besonders gutes Anhaften der als Abstandshalter vorgesehenen Beschichtung ermöglichen.

Durch die Behandlung des Keramik-Grundkörpers in der Art des Ätzens und insbesondere des interkristallinen Ätzens bildet sich nämlich eine spezifische Nanostruktur auf der Oberfläche aus. Dabei sind eine Vielzahl vergleichsweise kleinerer Poren oder Vertiefungen mit einer mittleren Ausdehnung im Sub-Mikrometerbereich, vorzugsweise kleiner als 500 nm und insbesondere kleiner 250 nm anzutreffen. Derartige Strukturen können beispielsweise anhand elektronenmikroskopischer Aufnahmen nachgewiesen werden. Die Oberfläche zeichnet sich insbesondere dadurch aus, dass die Tiefe der Nanostruktur, also die Tiefe der dabei erzielbaren Poren, größer ist als die Strukturweite, also die charakteristische laterale Ausdehnung der erzielten Strukturen. Damit ist die vorgesehene Porosität der Oberfläche somit mit für die gewünschte hoch belastbare stoffschlüssige Verbindung besonders günstigen Eigenschaften bereitstellbar.

Das Verhältnis bei der Nanostruktur zwischen der Strukturtiefe und der Strukturweite ist größer als 1:1, vorteilhafterweise größer als 1,5:1 und insbesondere größer als 2:1.

Die vorteilhafterweise vorgesehene Verarmungszone im Oberflächenbereich, die letztendlich die gewünschte Struktur und die gewünschten Eigenschaften bei der Verbindung mit dem Material des Abstandshalters bewirkt, kann insbesondere durch selektives oder zumindest selektiv beschleunigtes Herauslösen einzelner Bestandteile wie beispielsweise chemischer Elemente und/oder Oxide aus der Oberfläche, vorzugsweise durch einen geeignet gewählten Ätzprozess, hergestellt werden. Solch günstige Strukturen können insbesondere geschaffen werden, indem einzelne Elemente und/oder einzelne in der Keramik befindliche Metalloxide (Zirkonoxid, Aluminiumoxid, Yttriumoxid, Hafniumoxid etc.), insbesondere Yttriumoxid und Hafniumoxid, aus der Oberfläche gelöst werden. Somit entsteht auf und/oder im grenznahen Bereich der Oberfläche eine Verarmungszone dieser Metalloxide.

Weiterhin hat sich bei der Analyse im Hinblick auf die Phaseneigenschaften gezeigt, dass durch eine der oben beschriebenen Behandlungen auf der Oberfläche sich das Verhältnis zwischen der tetragonalen und der monoklinen Phase im stabilisierten Zirkonoxid geändert hat. Nach dem Sintervorgang könnte durch ein solches Verfahren der Anteil der monoklinen Phase in der Oberfläche auf oder um wenigstens 0,1 %, vorteilhafterweise auf oder um mehr als 0,5 % und insbesondere auf oder um mehr als 1,5 % gesteigert bzw. reduziert werden. Da die Oberfläche durch die geringere Dichte der monoklinen Phase unter Druck gesetzt wird, ist auf diesem Wege die initiale Rissbildung gehemmt, so dass mit einer Steigerung der initialen Festigkeit gerechnet werden kann.

Die Herstellung der vorgesehenen Verarmungszone in der Oberfläche des Keramikkörpers kann insbesondere durch einen Ätzprozess in einem geeignet gewählten Säurebad erfolgen. Die vorgesehenen Reaktionspartner für die Keramik des Grundkörpers, also die Ionen mit Bestandteilen aus der V. bis VII. Hauptgruppe des Periodensystems der Elemente, können dabei insbesondere als Salzbildner für das jeweilige Metall wirken. Insbesondere kann das Säurebad Ionen umfassen, die aus den Elementen Stickstoff (N), Sauerstoff (O), Fluor (F), Chlor (Cl), Schwefel (S) und/oder Phosphor (P) bestehen oder diese als Bestandteile umfassen. Bei der Behandlung im Säurebad besteht die Möglichkeit, dass die Ionen der Säure die Oberfläche chemisch verändern und als Verunreinigung auf der Oberfläche verbleiben.

Bezüglich des Verfahrens zur Herstellung eines derartigen Dental-Implantatsystems wird die genannte Aufgabe gelöst, indem der Verbindungszapfen vor der Herstellung der stoffschlüssigen Verbindung mit dem Abstandshalter im Bereich der vorgesehenen Verbindung mit dem Abstandshalter an seiner Oberfläche aufgeraut wird.

Die Aufrauung kann dabei in vorteilhafter Ausgestaltung durch Laserbestrahlung oder durch Sandstrahlen vorgenommen werden. Besonders vorteilhaft ist aber, wenn der Verbindungszapfen vor der Herstellung der stoffschlüssigen Verbindung mit dem Abstandshalter im Bereich der vorgesehenen Verbindung mit dem Abstandshalter an seiner Oberfläche porös gemacht wird, vorzugsweise durch einen Ätzprozess.

Zur Aufbringung einer zur Bildung des Abstandshalters vorgesehenen Beschichtung auf den Verbindungszapfen wird vorteilhafterweise auf diesen eine Dispersion aufgebracht, die anschließend getrocknet wird. In der Dispersion werden vorteilhafterweise zur Bildung der Beschichtung vorgesehene Partikel mit einer Partikelgröße von bis zu 20 μm in Lösung vorgehalten. Die Dispersion kann dann aufgesprüht oder auch anderweitig geeignet aufgetragen werden, wobei anschließend vorteilhafterweise ein Trocknungsschritt bei einer Trocknungstemperatur von beispielsweise etwa 150 °C erfolgen kann. Dadurch werden die Lösemittel-Bestandteile verflüchtigt, so dass sich die Materialpartikel niederschlagen und damit die Beschichtung bilden. Die Trocknung erfolgt dabei vorzugsweise im Vakuum oder in Unterdruck, so dass die Bildung von Lufteinschlüssen besonders gering gehalten ist. Insbesondere da derartige Lufteinschlüsse den Eintritt des Materials in die Oberflächenporen des Trägerkörpers blockieren könnten, ist auf diese Weise eine innige stoffschlüssige Verbindung besonders begünstigt.

In weiterer vorteilhafter Ausgestaltung ist zusätzlich, vorzugsweise nach der Trocknung, eine Wärmebehandlung des mit der Beschichtung versehenen Verbindungszapfens bei einer Behandlungstemperatur oberhalb der Erweichungstemperatur des Beschichtungsmaterials, vorzugsweise von mindestens 350 °C, besonders bevorzugt von mindestens 400 °C, vorgesehen. Damit kann in der Art eines Aufschmelzens des aufgebrachten Materials eine Homogenisierung erfolgen, wobei gegebenenfalls zugleich ein Eindringen des Beschichtungsmaterials in Oberflächenporen oder -rauigkeiten im Verbindungszapfen begünstigt wird. Eine derartige Behandlung ist besonders günstig und wirksam für Schichtdicken bis etwa 0,1 mm. Alternativ könnte für Schichtdicken größer 0,1 mm auch eine Pulverbeschichtung vorgesehen sein.

Die mit der Erfindung erzielten Vorteile bestehen insbesondere darin, dass durch den im Verbindungsbereich von Verbindungszapfen und Aufnahmekanal vorgesehenen Abstandshalter Ungenauigkeiten und Fertigungstoleranzen bei den Bauteilen ausgeglichen werden können, so dass auch bei Verwendung keramischer Materialien für den Verbindungszapfen oder auch die Implantat-Teile insgesamt ein flächiger Kontakt zwischen diesen Teilen hergestellt werden kann. Hierdurch ist selbst im Hinblick auf die auftretenden hohen Kaukräfte eine materialschonende und zuverlässige Weiterleitung der Kräfte möglich, so dass der Einsatz der an sich wünschenswerten keramischen Materialien auch in mehrteiligen Dental-Implantat-systemen ermöglicht ist.

Auch in anderen Einsatzgebieten von keramischen Werkstoffen, insbesondere auf Zirkonoxidbasis, ist eine zumindest im Oberflächenbereich vorgesehene Porosität von mindestens 0,1 besonders vorteilhaft, um eine haftende Beschichtung aus einem Kunststoff, insbesondere PEEK, aufbringen zu können. Die Vorteile einer Beschichtung auf Kunststoffbasis auf einem keramischen Grundkörper liegen insbesondere in der Veränderung der chemischen Eigenschaften und insbesondere der Säurebeständigkeit. Bezüglich der mechanischen Eigenschaftsänderungen sind insbesondere die optimierte Krafteinleitung /Kraftübertragung zu nennen. Aber auch die Veränderung des Reibwerts p mittels einer haftenden Beschichtung verschafft keramischen Werkstoffen deutliche Vorteile in der Anwendbarkeit, insbesondere im Vergleich zu anderen metallischen Werkstoffen.

Ein Ausführungsbeispiel der Erfindung wird anhand einer Zeichnung näher erläutert. Darin zeigen:

FIG. 1 bis 3     jeweils ein Dental-Implantatsystem als Explosionszeichnung,

FIG. 4      das Dental-Implantatsystem nach FIG. 3 im Längsschnitt,

FIG. 5      ein Aufbauteil des Dental-Implantatsystems nach FIG. 1 bis 3 im Querschnitt,

FIG. 6      ein Pfostenteil des Dental-Implantatsystems nach FIG. 1 bis 3 im Querschnitt,

FIG. 7, 8      ein Aufbauteil des Dental-Implantatsystems nach FIG. 1 bis 3 in seitlicher Ansicht,

FIG. 9, 10      jeweils eine alternative Ausführungsform eines Dental-Implantatsystems, und

FIG. 11      im Ausschnitt den Verbindungsbereich der Komponenten des Dental-Implantatsystems.

Gleiche Teile sind in allen Figuren mit denselben Bezugzeichen versehen.

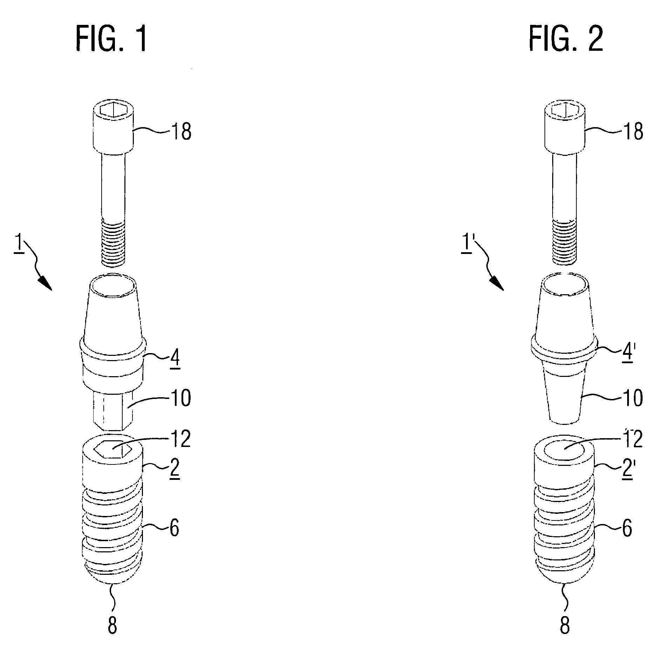

Das Dental-Implantatsystem 1, 1', 1" gemäß den FIG. 1 bis 4 ist jeweils zum Einsatz in den Kieferknochen anstelle eines extrahierten oder ausgefallenen Zahnes vorgesehen, um dort ein als Zahnersatz dienendes prothetisches Teil oder eine Krone zu halten. Das Dental-Implantatsystem 1, 1', 1" ist dazu jeweils mehrteilig ausgeführt und umfasst ein als so genanntes Pfostenteil ausgeführtes erstes Implantat-Teil 2, 2', 2" und ein diesem zugeordnetes, zur Anbringung eines Zahnersatzstücks vorgesehenes, auch als Aufbauteil bezeichnetes zweites Implantat-Teil 4. Das erste Implantat-Teil 2, 2', 2" oder Pfostenteil ist dabei außenseitig mit einem Außengewinde 6 versehen, das insbesondere am apikalen Ende 8 als selbstschneidendes Schraubengewinde ausgestaltet ist. Damit kann das erste Implantat-Teil 2, 2', 2" oder Pfostenteil durch Einschrauben an der vorgesehenen Stelle in den Kieferknochen eingesetzt werden.

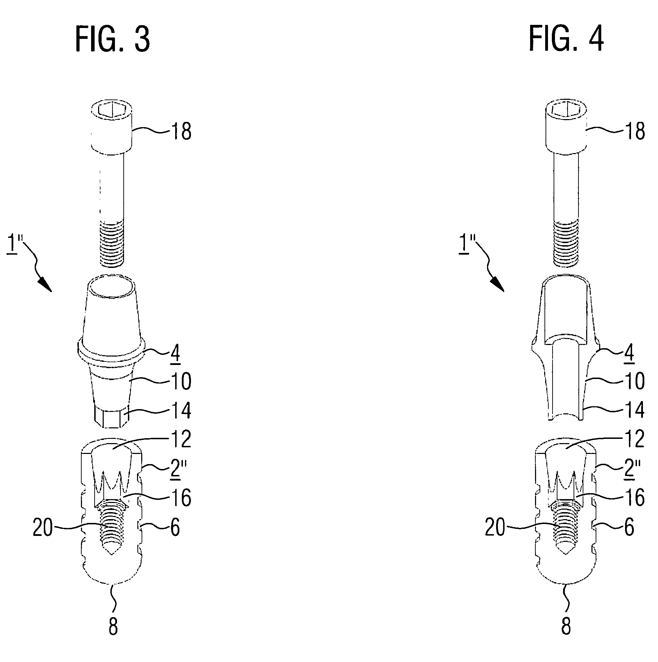

Um nach geeigneter Anbringung des Zahnersatzstücks oder der Prothese am Aufbauteil oder zweiten Implantat-Teil 4 ein Einbringen in das Pfostenteil oder erste Implantat-Teil 2, 2', 2" bei hoher mechanischer Stabilität zu ermöglichen, ist an das zweite Implantat-Teil 4 ein Verbindungszapfen 10 angeformt, der in einen zugeordneten, im ersten Implantat-Teil 2, 2', 2" vorgesehenen Aufnahmekanal 12 einschiebbar ist. Durch das Einschieben des Verbindungszapfens 10 in den Aufnahmekanal 12 entsteht eine mechanische Verbindung der Implantat-Teile 2, 4 miteinander. Für eine hohe mechanische Stabilität ist dabei der Verbindungszapfen 10 in seiner Außenkontur an die Innenkontur des Aufnahmekanals 12 angepasst, wobei beide in Längsrichtung gesehen konisch geformt sein können (Ausführungsbeispiel gemäß FIG. 2). Zudem kann, wie dies insbesondere im Ausführungsbeispiel gemäß FIG. 1 vorgesehen ist, die Außenkontur des Verbindungszapfens 10 - und dementsprechend angepasst die Innenkontur des Aufnahmekanals 12 - im Querschnitt mit einer mehrzähligen (im Ausführungsbeispiel sechszähligen) Symmetrie ausgestaltet sein, so dass beim Zusammenfügen der genannten Komponenten ein rotatorisches Gesperre entsteht und damit eine zuverlässige rotatorische Ausrichtung des Aufbauteils relativ zum Pfostenteil eingestellt werden kann. Im Ausführungsbeispiel gemäß FIG. 3, 4 ist zu diesem Zweck einer Indizierung oder zur Ausbildung eines rotatorischen Gesperres endseitig am Verbindungszapfen 10 ein Indizierungselement 14 mit seinerseits einem Querschnitt mit mehrzähliger Symmetrie angeordnet, das im montierten Zustand in ein entsprechendes, zugeordnetes Endkanalstück 16 im Aufnahmekanal 12 eingreift.

Die Dental-Implantatsysteme 1, 1', 1" in den Ausführungsbeispielen gemäß FIG. 1 bis 4 sind jeweils für eine Schraubverbindung der Implantat-Teile 2, 4 miteinander ausgeführt. Dazu ist jeweils eine Verbindungsschraube 18 vorgesehen, die in ein innerhalb des ersten Implantat-Teils 2, 2', 2" jeweils vorgesehenes Schraubgewinde 20 eingreift.

Hinsichtlich ihrer Materialwahl sind die Implantat-Teile 2, 4 geeignet an den Einsatzzweck angepasst und grundsätzlich aus keramischem Material wie beispielsweise Zirkonoxid oder Aluminiumoxid gefertigt. Insbesondere ist als Material für den Verbindungszapfen 10 Yttrium-stabilisiertes Zirkonoxid gewählt. Dieses weist eine vergleichsweise große Härte von 1500 +- 100 nach Vickers ("Vickershärte", HV) auf. Wegen der geringen elastischen und der mangelnden plastischen Verformbarkeit eines derartig harten Materials ist jedoch davon auszugehen, dass ein flächiger Kontakt der Implantat-Teile 2, 4 miteinander gerade im Bereich des Verbindungszapfens 10 nicht vorliegt. Gerade bei der Übertragung der vergleichsweise großen Kaukräfte können damit punktuelle Belastungen im Kontaktbereich der Implantatteile 2, 4 auftreten. Diese könnten wiederum in erhöhtem lokalem Druck im Verbindungsbereich und demzufolge zur möglichen Bildung von Mikrorissen oder Beschädigungen in der Keramikstruktur resultieren, die wiederum zu Frakturen oder Brüchen in den Bauteilen an sich führen können. Des weiteren könnte - gerade bei einer Kombination eines keramischen Verbindungszapfens 10 mit einem metallischen Pfostenteil 4 - auf Grund des großen Härteunterschieds zwischen den Komponenten Metallabrieb am Pfostenteil auftreten, der zu unerwünschten Verunreinigungen und/oder Verfärbungen oder dergleichen führen könnte.

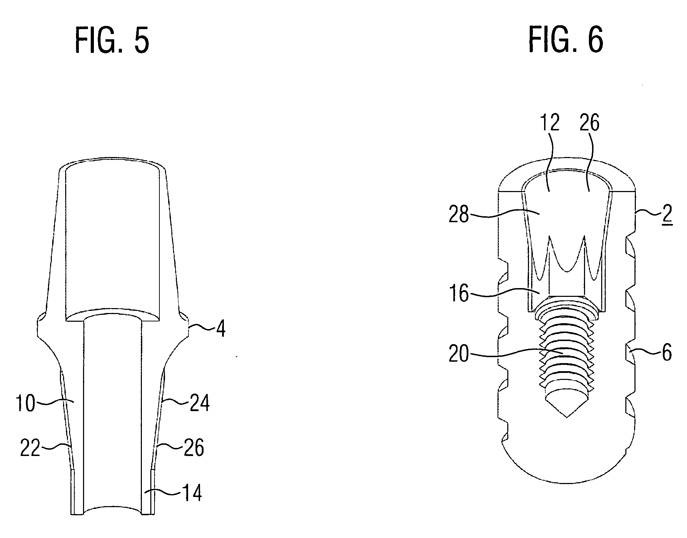

Um dem geeignet entgegenzutreten, ist als zusätzliches Element im Aufbau des Dental-Implantatsystems 1, 1', 1" in der Art eines Ausgleichskörpers oder Abstandshalters 22 der Verbindungszapfen 10 in einem Kontaktbereich zum Aufnahmekanal 12 auf seiner Oberfläche 24 mit einer Beschichtung 26 versehen, wie dies in der Querschnittszeichnung gemäß FIG. 5 dargestellt ist. Als Auslegungskriterium für die Beschichtung 26 ist dabei vorgesehen, dass sie aus einem im Vergleich zum Material des Verbindungszapfens 10 deutlich weicheren Material mit einer Härte (nach Vickers) von höchstens 25 ausgeführt sein sollte. Dadurch stellt die Beschichtung 26 - auf Grund geeigneter Duktilität - einen geeigneten Ausgleich im Zwischenraum zwischen den Implantat-Teilen 2, 4 her, so dass eine flächige Kraftübertragung zwischen den Komponenten gewährleistet ist. Im Ausführungsbeispiel ist die Beschichtung 26 aus einem Kunststoff, nämlich aus dem hochbelastbaren thermoplastischen Kunststoff Polyetheretherketon, auch als PEEK bekannt, hergestellt. PEEK weist üblicherweise eine Härte nach Vickers von etwa 12 auf und erfüllt damit das nun vorgesehene Auslegungskriterium besonders zufriedenstellend.

Selbstverständlich kann die Beschichtung 26 bei gleicher Wirkung alternativ oder zusätzlich auch auf der Innenoberfläche 28 des Aufnahmekanals 12 im Pfostenteil 2 oder zweiten Implantat-Teil 4 angeordnet sein, wie dies in der Querschnittszeichnung in FIG. 6 dargestellt ist.

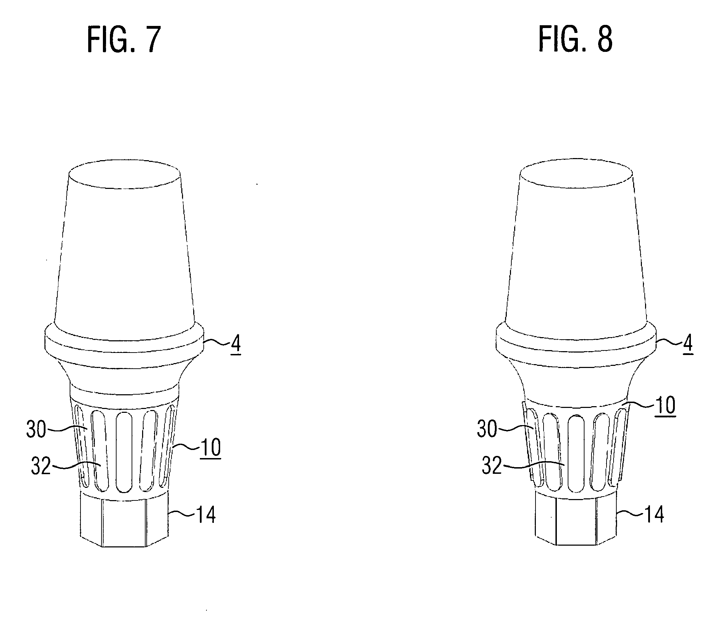

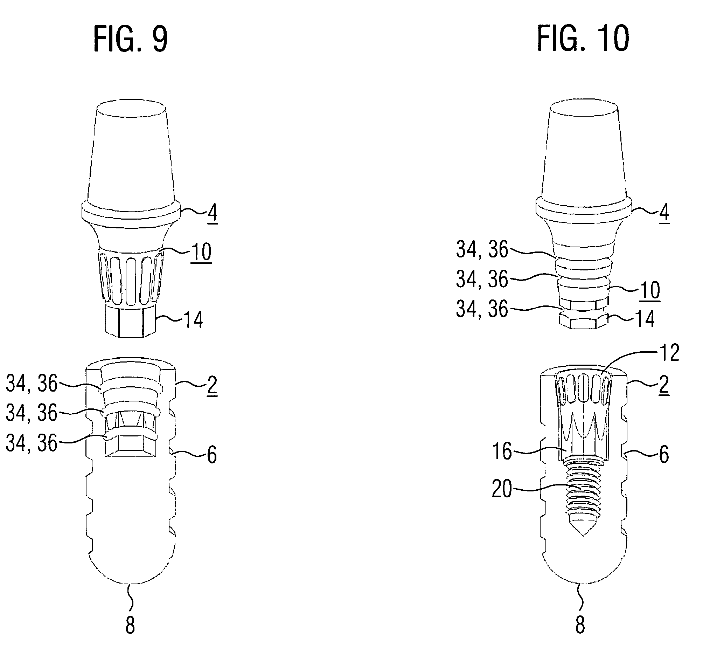

Vorzugsweise ist die zur Bildung des Abstandshalters 22 vorgesehene Beschichtung 26 durchgehend in der Art einer vollflächigen Beschichtung ausgeführt. Alternativ kann sie aber auch in der Art eines den Verbindungszapfen 10 umschließenden Netzes, Geflechts oder dergleichen eine Mehrzahl von Teilelementen oder Teilbeschichtungen 30 umfassen, die unter Bildung von Zwischenräumen 32 als netzartiges Gebilde (FIG. 7) oder auch unabhängig voneinander (FIG. 8) jeweils stoffschlüssig mit dem Verbindungszapfen 10 - bzw. bei innenseitiger Anbringung mit der Innenoberfläche des Aufnahmekanals 12 - verbunden sind. Auf diese Weise ist einerseits durch die Teilelemente oder Teilbeschichtungen 30 eine zuverlässige Einstellung eines geeigneten, die möglicherweise fertigungsbedingt auftretenden Oberflächenrauigkeiten der Kontaktflächen ausgleichenden Mindestabstands zwischen den Kontaktflächen möglich, wobei andererseits in den Zwischenräumen 32 noch freie, für eine Materialaufnahme geeignete Volumina gebildet werden. Diese eignen sich in besonderem Maße zur Aufnahme überschüssigen Materials, beispielsweise von Klebstoff oder dergleichen. Ein solchermaßen ausgeführtes Verbindungssystem ist somit für eine Klebeverbindung der Implantat-Teile 2, 4 miteinander besonders geeignet. Noch weiter begünstigt werden kann diese Bildung von Aufnahmekammern für überschüssigen Klebstoff, indem im jeweils anderen Bauteil - in FIG. 9 gezeigt für den Aufnahmekanal 12 und in FIG. 10 gezeigt für den Verbindungszapfen 10 - mechanisch weitere Aufnahmekammern 34, im Ausführungsbeispiel gemäß FIG. 9, 10 in Form von zusätzlich angebrachten umlaufenden Nuten 36, vorgesehen sind.

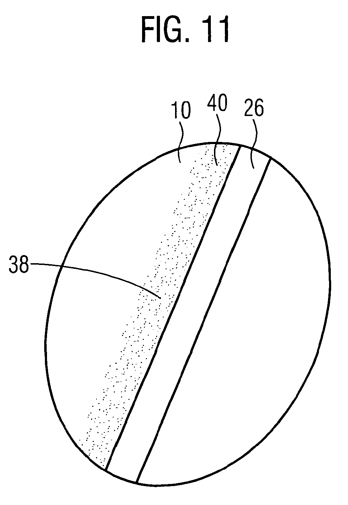

In beiden bevorzugten Varianten, also sowohl bei einer Ausführung als durchgehende, vollflächige Beschichtung 26 als auch bei einer Ausgestaltung mit Zwischenräumen 32, ist eine innige stoffschlüssige Verbindung zwischen dem Verbindungszapfen 10 bzw. der Innenoberfläche 28 des Aufnahmekanals 12 einerseits und der den Abstandshalter 22 bildenden Beschichtung 26 andererseits vorgesehen. Um dies besonders zu begünstigen, ist dabei die Oberfläche des Verbindungszapfens 10 im Bereich der Beschichtung aufgeraut und/oder porös ausgeführt. Wie dies in FIG. 11 im vergrößerten Ausschnitt schematisch dargestellt ist, bewirkt die Aufrauung oder Porosität im Oberflächenbereich, insbesondere des jeweiligen keramischen Bauteils, dass eine Vielzahl kleiner Materialkammern 38 gebildet werden, in die das vergleichsweise weiche, die Beschichtung 26 bildende Material eindringen kann. Damit entsteht die angestrebte Innigkeit der stoffschlüssigen Verbindung, so dass die Beschichtung 26 besonders fest an der sie tragenden Oberfläche anhaftet. Die genannte Porosität oder Aufrauung der Oberfläche kann dabei durch ein besonders geeignetes Verfahren, beispielsweise durch - gegebenenfalls materialspezifisches - Anätzen, durch gezieltes Einstellen einer Verarmungszone eines Material- oder eines kristallographischen Parameters oder dergleichen hergestellt werden.

In der ausschnittsweise vergrößerten Darstellung in FIG. 11 ist die hierdurch erhältliche stoffschlüssige Verbindung der Beschichtung 26 mit dem sie tragenden Bauteil, in der Figur dem Verbindungszapfen 10, schematisch gezeigt. Durch die Anrauung der Oberfläche des Verbindungszapfens, gegebenenfalls verbunden mit einer Verarmungszone in Oberflächennähe, die beispielsweise durch gezieltes Herauslösen oder -ätzen einzelner Materialbestandteile oder -komponenten hergestellt werden kann, entsteht eine Verbindungszone 40, in der Material aus der Beschichtung 26 in die Poren, Oberflächenlöcher oder dergleichen in der entsprechend präparierten Oberfläche des Verbindungszapfens 10 eindringt. In dieser Verbindungszone 40 liegen also die Materialien aus dem Verbindungszapfen 10 einerseits und der Beschichtung 26 andererseits gemeinsam vor, so dass sie eine innige Verzahnung bilden. Ein derartiges Konzept zur Aufbringung einer Beschichtung auf eine vorzugsweise keramische Oberfläche wird im Übrigen als eigenständig erfinderisches Konzept auch für Anwendungsbereiche unabhängig von Dentalimplantaten angesehen.

Bezugszeichenliste

| 1, 1 ', 1" | Dental-Implantatsystem |
| 2, 2', 2" | erstes Implantat-Teil |
| 4 | zweites Implantat-Teil |
| 6 | Außengewinde |
| 8 | apikales Ende |
| 10 | Verbindungszapfen |
| 12 | Aufnahmekanal |
| 14 | Indizierungselement |
| 16 | Endkanalstück |
| 18 | Verbindungsschraube |

| | |
|---|---|
| 20 | Schraubgewinde |
| 22 | Abstandshalter |
| 24 | Oberfläche |
| 26 | Beschichtung |
| 28 | Innenoberfläche |
| 30 | Teilbeschichtung |
| 32 | Zwischenraum |
| 34 | Aufnahmekammer |
| 36 | Nut |
| 38 | Materialkammer |
| 40 | Verbindungszone |

**Patentansprüche**

1. Dental-Implantatsystem (1, 1', 1") mit einem zur Einbringung in einen Kieferknochen vorgesehenen ersten Implantat-Teil (2, 2', 2") und mit einem diesem zugeordneten, zur Anbringung eines Zahnersatzstücks vorgesehenen zweiten Implantat-Teil (4), wobei die Implantat-Teile (2, 2', 2", 4) über einen an eines der Implantat-Teile (2, 2', 2", 4) angeformten, in einen im anderen Implantat-Teil (2, 2',2", 4) vorgesehenen Aufnahmekanal (12) einschiebbaren Verbindungszapfen (10) mechanisch miteinander verbindbar sind, wobei der Verbindungszapfen (10) aus einem Material mit einer Härte (nach Vickers) von mindestens 500 gebildet ist und in einem Kontaktbereich zum Aufnahmekanal (12) auf seiner Oberfläche eine aus einem im Vergleich zum Material des Verbindungszapfens (10) weicheren Material gebildete Beschichtung (26) mit einer Schichtdicke von höchstens 0,3 mm aufweist, wobei der Verbindungszapfen (10) zur Bildung einer stoffschlüssigen Verbindung mit der Beschichtung (26) in seinem mit der Beschichtung (26) versehenen Oberflächenbereich eine poröse Oberfläche aufweist, und wobei die Oberfläche des Verbindungszapfens (10) im Bereich der stoffschlüssigen Verbindung mit der Beschichtung (26) einen RA-Wert von höchstens 10 % der Schichtdicke aufweist.

2. Dental-Implantatsystem (1, 1', 1") nach Anspruch 1, bei dem der Verbindungszapfen (10) als Keramik-Körper ausgeführt ist, bei dem die poröse Oberfläche durch einen Ätzprozess erzeugt wird und eine Nanostruktur mit einer Vielzahl von Poren oder Vertiefungen mit einer mittleren Ausdehnung kleiner als 500 nm aufweist.

3. Dental-Implantatsystem (1, 1', 1") nach Anspruch 1 oder 2, bei dem der Verbindungszapfen (10) in seinem mit der Beschichtung (26) versehenen Oberflächenbereich unterhalb der Beschichtung (26) eine Verbindungszone (40) aufweist, in der Material aus der Beschichtung (26) in die Poren und Oberflächenlöcher der porösen Oberfläche des Verbindungszapfens (10) eindringt und die Materialien aus dem Verbindungszapfen (10) einerseits und der Beschichtung (26) andererseits innerhalb der Verbindungszone (40) gemeinsam vorliegen, so dass sie eine innige Verzahnung bilden.

4. Dental-Implantatsystem (1, 1', 1") nach einem der Ansprüche 1 bis 3, bei dem die poröse Oberfläche des Verbindungszapfens (10) eine Porosität von mindestens 0,1 aufweist.

5. Dental-Implantatsystem (1, 1', 1") nach einem der Ansprüche 1 bis 4, dessen Beschichtung (26) aus einer Anzahl von stoffschlüssig mit dem Verbindungszapfen (10) verbundenen Teilbeschichtungen (30) besteht.

6. Dental-Implantatsystem (1, 1', 1") nach einem der Ansprüche 1 bis 5, dessen Beschichtung (26) eine Schichtdicke von mindestens 0,001 mm, vorzugsweise mindestens 0,05 mm, besonders bevorzugt mindestens 0,01 mm, und/oder von höchstens 0,2 mm, besonders bevorzugt höchstens 0,1 mm, aufweist.

7. Dental-Implantatsystem (1, 1', 1") nach einem der Ansprüche 1 bis 6, bei dem die Beschichtung (26) aus einem Kunststoff mit einem Elastizitätsmodul von mindestens 1000 MPa hergestellt ist.

8. Dental-Implantatsystem (1, 1', 1") nach Anspruch 7, bei dem der die Beschichtung (26) bildende Kunststoff eine Wasseraufnahme von höchstens 1 %, vorzugsweise von höchstens 0,5 %, besonders bevorzugt von höchstens 0,2 %, aufweist.

9. Dental-Implantatsystem (1, 1', 1") nach Anspruch 7 oder 8, bei dem der die Beschichtung (26) bildende Kunststoff eine Erweichungstemperatur von mindestens 140 °C, vorzugsweise von mindestens 180 °C, aufweist.

10. Dental-Implantatsystem (1, 1', 1") nach einem der Ansprüche 1 bis 9, bei dem die Oberfläche des Verbindungszapfens (10) im Bereich der stoffschlüssigen Verbindung mit der Beschichtung (26) einen RA-Wert von höchstens 5 % der Schichtdicke aufweist.

11. Dental-Implantatsystem (1, 1', 1") nach einem der Ansprüche 1 bis 10, dessen Verbindungszapfen (10) aus Yttrium- und/oder Aluminiumoxid-stabilisiertem Zirkonoxid ausgeführt ist, wobei die Oberfläche des Verbindungszapfens (10) im Bereich der stoffschlüssigen Verbindung mit der Beschichtung (26) eine Verarmungszone mit einem im Vergleich zum Innenvolumen des Verbindungszapfens reduziertem Yttrium- bzw. Aluminiumoxid-Anteil aufweist.

12. Verfahren zur Herstellung eines Dental-Implantatsystems (1, 1', 1") nach einem der Ansprüche 1 bis 11, bei dem der Verbindungszapfen (10) vor der Herstellung der stoffschlüssigen Verbindung mit der Beschichtung (26) im Bereich der vorgesehenen Verbindung mit der Beschichtung (26) an seiner Oberfläche aufgeraut wird.

13. Verfahren nach Anspruch 12, bei dem der Verbindungszapfen (10) einem Ätzprozess ausgesetzt wird.

14. Verfahren nach Anspruch 12 oder 13, bei dem zur Aufbringung der Beschichtung (26) auf den Verbindungszapfen (10) eine Dispersion aufgebracht wird, die anschließend getrocknet wird.

## Claims

1. A dental implant system (1, 1', 1") having a first implant part (2, 2', 2") provided for introduction into a jawbone and having a second implant part (4) associated therewith and provided for attachment of a dental prosthesis piece, wherein the implant parts (2, 2', 2", 4) can be mechanically connected to each other by means of a connecting stud (10) which is formed on one of the implant parts (2, 2', 2", 4) and can be inserted into a receiving channel (12) provided in the other implant part (2, 2', 2", 4), wherein the connecting stud (10) is made of a material with a hardness (according to Vickers) of at least 500 and in a contact region with the receiving channel (12) is provided on its surface with a coating (26) having a layer thickness of at most 0.3 mm and made of a material which is softer as compared with the material of the connecting stud (10), wherein the connecting stud (10) has in its surface region provided with the coating (26) a porous surface for forming a substance-locking connection with the coating (26), and wherein the surface of the connecting stud (10) has in the region of the substance-locking connection with the coating (26) a roughness value of at most 10 % of the layer thickness.

2. The dental implant system (1, 1', 1 ") of claim 1, wherein the connecting stud (10) is designed as a ceramic body, wherein the porous surface is generated by means of an etching process and has a nanostructure with a multitude of pores or indentations with a mean extension of less than 500 nm.

3. The dental implant system (1, 1', 1 ") of claim 1 or 2, wherein the connecting stud (10) has in its surface region provided with the coating (26), below the coating (26), a connecting region (40) in which material from the coating (26) penetrates into the pores and surface holes of the porous surface of the connecting stud (10), and the materials from the connecting stud (10), on the one hand, and of the coating (26), on the other hand, are together present within the connecting region (40), so that they form an intimate interleaving.

4. The dental implant system (1, 1', 1 ") of any of claims 1 to 3, wherein the porous surface of the connecting stud (10) has a porosity of at least 0.1.

5. The dental implant system (1, 1', 1 ") of any of claims 1 to 4, whose coating (26) consists of a number of partial coatings (30) which are connected with the connecting stud (10) in a substance-locking manner.

6. The dental implant system (1, 1', 1 ") of any of claims 1 to 5, whose coating (26) has a layer thickness of at least 0.001 mm, preferably at least 0.05 mm, particularly preferably at least 0.01 mm, and/or of at most 0.2 mm, particularly preferably at most 0.1 mm.

7. The dental implant system (1, 1', 1 ") of any of claims 1 to 6, wherein the coating (26) is made of a synthetic material with a modulus of elasticity of at least 1000 MPa.

8. The dental implant system (1, 1', 1 ") of claim 7, wherein the synthetic material forming the coating (26) has a water absorption of at most 1 %, preferably at most 0.5 %, particularly preferably at most 0.2 %.

9. The dental implant system (1, 1', 1 ") of claim 7 or 8, wherein the synthetic material forming the coating (26) has a softening temperature of at least 140 °C, preferably at least 180 °C, particularly preferably 300 °C.

10. The dental implant system (1, 1', 1 ") of any of claims 1 to 9, wherein the surface of the connecting stud (10) has in the region of the substance-locking connection with the coating (26) a roughness value of at most 5 % of the layer thickness.

11. The dental implant system (1, 1', 1 ") of any of claims 1 to 10, whose connecting stud (10) is made of yttrium oxide and/or aluminium oxide-stabilized zirconium oxide, wherein the surface of the connecting stud (10) has in the region of the substance-locking connection with the coating (26) a depletion region with a share of yttrium oxide or aluminium oxide which is reduced as compared with the inner volume of the connecting stud.

12. A method for producing a dental implant system (1, 1', 1") of any of claims 1 to 11, wherein the connecting stud (10) is roughened on its surface in the region of the intended connection with the coating (26), prior to the production of the substance-locking connection with the coating (26).

**13.** The method of claim 12, wherein the connecting stud (10) is subjected to an etching process.

**14.** The method of any of claims 12 to 13, wherein, for applying the coating (26) on the connecting stud (10), a dispersion is applied, which is then dried.

**Revendications**

**1.** Système d'implant dentaire (1, 1', 1") ayant une première partie d'implant (2, 2', 2") destinée à être mise en place dans un os de mâchoire, et ayant une deuxième partie d'implant (4) associée à la première partie et destinée à l'installation d'un élément de denture de remplacement, dans lequel les parties d'implant (2, 2', 2", 4) peuvent être reliées mécaniquement l'une à l'autre par l'intermédiaire d'une broche de liaison (10) formée sur l'une des parties d'implant (2, 2', 2", 4) et pouvant coulis-ser dans un canal de réception (12) prévu dans l'autre partie d'implant (2, 2', 2", 4), dans lequel la broche de liaison (10) est faite d'un matériau d'une dureté (selon Vickers) d'au moins 500 et, dans une zone de contact avec le canal de réception (12), est munie, sur sa surface, d'un revêtement (26) qui a une épaisseur de couche d'au maximum 0,3 mm et est fait d'un matériau qui est plus mou que le matériau de la broche de liaison (10), dans lequel la broche de liaison (10) a, dans sa zone de surface munie du revêtement (26), une surface poreuse pour constituer une liaison par liaison de matière au revêtement (26), et dans lequel la surface de la broche de liaison (10) a, dans la zone de la liaison de matière au revêtement (26), une valeur de rugosité d'au maximum 10 % de l'épaisseur de couche.

**2.** Système d'implant dentaire (1, 1', 1") selon la revendication 1, dans lequel la broche de liaison (10) est conçue comme un corps céramique, dans lequel la surface poreuse est générée au moyen d'un procédé caustique et a une nanostructure avec une multitude de pores ou d'indentations avec une étendue moyenne de moins de 500 nm.

**3.** Système d'implant dentaire (1, 1', 1") selon la revendication 1 ou 2, dans lequel la broche de liaison (10) a, dans sa zone de surface munie du revêtement (26), au-dessous du revêtement (26), une zone de liaison (40) dans laquelle du matériau du revêtement (26) pénètre dans les pores et les trous de surface de la surface poreuse de la broche de liaison (10), et les matériaux de la broche de liaison (10), d'un côté, et du revêtement (26), d'un autre côté, sont présents ensemble dans la zone de liaison (40), de façon qu'ils forment un engrènement intime.

**4.** Système d'implant dentaire (1, 1', 1") selon l'une quelconque des revendications 1 à 3, dans lequel la surface poreuse de la broche de liaison (10) a une porosité d'au moins 0,1.

**5.** Système d'implant dentaire (1, 1', 1") selon l'une quelconque des revendications 1 à 4, dont le revêtement (26) consiste d'un nombre de revêtements partiels (30) qui sont reliés avec la broche de liaison (10) par liaison de matière.

**6.** Système d'implant dentaire (1, 1', 1") selon l'une quelconque des revendications 1 à 5, dont le revêtement (26) a une épaisseur de couche d'au moins 0,001 mm, de préférence d'au moins 0,05 mm, particulièrement de préférence d'au moins 0,01 mm, et/ou d'au maximum 0,2 mm, particulièrement de préférence d'au maximum 0,1 mm.

**7.** Système d'implant dentaire (1, 1', 1") selon l'une quelconque des revendications 1 à 6, dans lequel le revêtement (26) est fait d'une matière synthétique d'un module d'élasticité d'au moins 1000 MPa.

**8.** Système d'implant dentaire (1, 1', 1") selon la revendication 7, dans lequel la matière synthétique formant le revêtement (26) a une absorption d'eau d'au maximum 1 %, de préférence d'au maximum 0,5 %, particulièrement de préférence d'au maximum 0,2 %.

**9.** Système d'implant dentaire (1, 1', 1") selon la revendication 7 ou 8, dans lequel la matière synthétique formant revêtement (26) a une température d'amollissement d'au moins 140 °C, de préférence d'au moins 180 °C, particulièrement de préférence de 300 °C.

**10.** Système d'implant dentaire (1, 1', 1") selon l'une quelconque des revendications 1 à 9, dans lequel la surface de la broche de liaison (10) a, dans la zone de liaison de matière au revêtement (26), une valeur de rugosité d'au maximum 5 % de l'épaisseur de couche.

**11.** Système d'implant dentaire (1, 1', 1") selon l'une quelconque des revendications 1 à 10, dont la broche de liaison (10) est faite d'oxyde de zirconium stabilisé par l'oxyde d'yttrium et/ou par l'oxyde d'aluminium, dans lequel la surface de la broche de liaison (10) a, dans la zone de liaison de matière au revêtement (26), une zone de déplétion avec une part d'oxyde d'yttrium ou d'oxyde d'aluminium qui est réduite en comparaison avec le volume intérieur de la broche de liaison.

**12.** Procédé pour la production d'un système d'implant dentaire (1, 1', 1") selon l'une quelconque des revendications 1 à 11, dans lequel la broche de liaison (10) est rendue rugueuse sur sa surface dans la zone de la liaison prévue avec le revêtement (26), avant la production de la liaison de matière au revêtement (26).

13. Procédé selon la revendication 12, dans lequel la broche de liaison (10) est soumise à un procédé caustique.

14. Procédé selon l'une quelconque des revendications 12 à 13, dans lequel, pour appliquer le revêtement (26) sur la broche de liaison (10), une dispersion est appliquée, qui est ensuite séchée.

FIG. 1

FIG. 2

18

1

4

10

12

2

6

8

18

1'

4'

10

12

2'

6

8

EP 2 640 306 B1

# FIG. 3                    # FIG. 4

EP 2 640 306 B1

FIG. 6

FIG. 5

FIG. 7

FIG. 8

EP 2 640 306 B1

FIG. 10

FIG. 9

# FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006018726 A1
- DE 102008054138 A1
- CH 696625 A5
- EP 0015599 A1